# EUROPEAN PATENT SPECIFICATION

(11) **EP 2 891 319 B1**
(45) Date of publication and mention of the grant of the patent: **10.03.2021**
(21) Application number: 13756147.8
(22) Date of filing: 30.08.2013
(51) Int. Cl.: H04N 21/462, H04N 21/482

(54) **ELECTRONIC MEDIA SERVER**
ELEKTRONISCHER MEDIENSERVER
SERVEUR MULTIMÉDIA ÉLECTRONIQUE

(30) Priority: 31.08.2012 EP 12182677
(43) Date of publication of application: 08.07.2015
(73) Proprietor: FUNKE TV Guide GmbH, 20457 Hamburg (DE)
(72) Inventor: SCHINDLER, Jörg, 12587Berlin (DE); ZIER, Thomas, 13465 Berlin (DE)
(74) Representative: Eisenführ Speiser
(86) International application number: PCT/EP2013/068039
(87) International publication number: WO 2014/033286

(56) References cited:
- US-A1- 2002 157 100
- US-A1- 2009 031 348

## Description

The present invention relates to an electronic media server for providing media channel information data of a plurality of media channels to a plurality of electronic media clients, wherein the plurality of media channels comprises at least one real media channel and at least one virtual media channel. In particular, the present invention relates to an electronic media server for providing media channel information data of TV channels to a plurality of electronic media clients, wherein the TV channels comprise at least one real TV channel and at least one virtual TV channel.

In conventional TV systems, a user is provided with a plurality of media channels or media sources comprising a plurality of media content items. A media channel is defined by a predetermined sequence of media content items such as news, movies, advertisements, talk shows, live event transmission etc. A media channel traditionally is associated with a media source. In traditional broadcast TV the term media channel refers to a frequency band over which a TV broadcaster transmits media content in a continuous stream. Thus, a channel (frequency band) is associated with a media source (TV broadcaster).

A media channel or media source can be linear or non-linear. A broadcasting channel - like a traditional TV channel - is a linear media channel that more or less continuously delivers a flux of media content items. Consequently, media content of a linear media content channel is pushed to the recipient that watches TV. Media content items provided by a real content source via a linear media channel can only be received real-time at the time of transmission.

A virtual, non-linear media channel as for instance provided by a virtual media source is linked to media content items for being explicitly requested by a user, such items are usually available anytime and are not presented according to a time-schedule schedule that is set by the provider that operates the media source. Therefore, media content items of a non-linear media content channel are accessed in pull mode. An exception is live streaming of media content items, because it comprises features of a linear (broadcasting) and non-linear (on demand) media channel. In the following, live streaming is considered non-linear.

Linear media channels, such as traditional TV channels, are real media channels. Virtual media channels generally comprise media content items from different media sources as for instance server or recorder. Server and recorder are real media content sources that can be non-linear media content sources and that can provide media content items. However, since a virtual media channel that is played back by the aid of an electronic media client can inter alia behave similar to a traditional linear media channel as provided by a single real linear media source, virtual media channels are suggesting to the user that has selected a virtual channel a single media source that in fact is "created" by an electronic media client that enables playback (reproduction) of the sequence of media content items that are part of a virtual media channel. Because a virtual media channel thus suggests the existence of a (virtual) media source, the term "virtual media channel" and "virtual media source" are used synonymously in the present disclosure.

The media channels the user is provided are e.g. broadcasting TV channels (linear), video on demand (VOD) channels (non-linear) and internet streaming channels (non-linear). Representations of these channels are usually arranged in different sub-menus of a TV system to be selected by the user. Since the offer of different media content sources is growing rapidly and the user of a media system, especially a TV system, differ in their preferences and interests concerning media content items, It is a demand for an efficient TV system to provide a selected and personalized offer of content items to each individual user. By providing a personalized TV system, each user can better identify and find media content items he likes most.

To meet this demand, recommender engines have been established. The use of recommender technology is steadily being introduced into the marked. Among various examples, websites offer a recommender engine to support users in finding content items - such as movies, documentaries or talkshows - they like. Furthermore, electronic devices - such as personal video recorder - use a recommender engine for automatically filtering content items - such as books, songs, TV programs, movies or the like. In order to deliver results that fit the interests and preferences of the user best, recommender engines have to be provided with data reflecting these interests and preferences. Such data is usually contained in a user profile. In order to optimize the functionality of a recommender engine, the user profile has to be updated regularly.

A recommender typically learns the interests and preferences of a user, based on ratings that the user supplies on media content items. Such ratings are typically binary classifications, such as "like" and "dislike", respectively. In a more elaborate type of rating system, a range of rating degrees, e.g. from 0 (most disliked) to 10 (most liked), can be provided for reflecting the user's interests and preferences. Such elaborate type of rating system is especially useful for arranging the rated media content items in a respective ranking.

However, standard recommender systems have the disadvantage that the recommender just randomly presents a plurality of media content items to a user, wherein the user explicitly has to pick a media content item he wants to consume, e.g. TV show he wants to watch or audio item he wants to listen to.

An alternative or additional possibility for preselecting media content items and/or media channels for a user is a server based method. Such system comprises an electronic media server for providing a plurality of media channels to a plurality of electronic media client. The media content items of the media channels can be consumed by the users of the media client. In conventional TV systems, the electronic media server receives media channels and/or media content items and manages virtual media channels comprising said media content items. In general, the electronic media server broadcasts the media channels to a plurality of media clients.

However, such TV systems have the disadvantage that the server has to store and deliver a huge amount of media content items, thus rendering such server very complex and expensive. US 2009/031348 discloses an electronic media server according to the preamble of claim 1.

It is therefore an object of the present invention to provide a media server for a TV system that does not have the above-mentioned deficiencies.

This object is achieved by an electronic media server according to claim 1. The electronic media server is configured to provide media channel information data of a plurality of media channels to a plurality of electronic media clients), wherein the plurality of media channels comprises at least one real media channel and at least one virtual media channel. On a respective media client such as a smart TV or a similar device, a virtual media channel can look and behave like a traditional linear media channel provided by real media source. However, a virtual media content source is a description of a virtual media channel that can comprise content items from various different media content sources including linear media content sources or non-linear media content sources, e.g. media content sources that store content items, for instance on content servers that are accessible via the internet. If the user accesses a virtual media channel, the media content items that are included in the sequence that is defined by the virtual media channel are accessed and retrieved by the user's terminal device such as a set top box or a smart TV.

In particular, an electronic media server for providing media channel information data to a plurality of electronic media clients is suggested, wherein the plurality of media channels comprises at least one real media channel and one virtual media channel. The media channel information data comprises metadata that characterizes media content items of a plurality of media channels. A real media channel is a linear media channel, namely a broadcasted media channel, e.g. a TV or a radio channel in a traditional sense that is provided and broadcasted by a broadcasting transmitter. The real media channels can be broadcasted e.g. via satellite, cable or terrestrial broadcasting.

On the other hand, a virtual media channel is an editorial composed media channel, comprising media content items that originate from linear and/or non-linear media content sources. Therefore, media content items of a virtual media channel can be live broadcasted (linear), recorded broadcasted (non-linear), live streamed (non-linear), recorded streamed (non-linear) or on demand downloadable (non-linear) media content items, that can originate of different sources and/or media content items which are supposed to be watched at a different time and/or in a different order compared to the media source they originate from. For example, in the program of a real media channel, the media content items A, B and C are determined to be broadcasted sequentially. A virtual media channel could just comprise media content items A and C of the real media channel, wherein in the virtual media channel, the media content items A and C are presented seamlessly. Therefore, for the eyes of a user, a virtual channel can have the same appearance than a real (linear) media channel. To achieve such behavior, linear content items that are broadcasted have to be recorded to be available in a virtual media channel. Preferably, for enabling the user to distinguish real media channels from virtual media channels, a respective mark is provided, e.g. an indication label, which is shown at a graphical user interface in combination with a representation of a respective virtual media channel and/or real media channel.

The media channel information data of a real media channel comprises a link to a linear media content source and the media channel information data of a virtual media channel comprises for each media content item of that respective virtual media channel a link to a respective linear media content source or a non-linear media content source. The links comprised in the media channel information data include at least information about the media sources for retrieving the media content items of a respective channel.

It is preferred that a virtual media channel just presents media content items in a specific sequence, like a playlist, without a predetermined playback time - in contrast to a real (broadcasting) media channel, in which each media content item is assigned to a determined playback time (that is the time of transmission). Hence, a user can watch a virtual channel in a lean-back attitude wherein the media content items are provided in the predetermined sequence similar to real media channel. However, the user can also access the media content items of a virtual channel directly without being bound to a certain playback sequence. The user may also scroll back and forth in a virtual media channel. It is preferred that the electronic media server and/or the electronic media client are configured to mark a media content item of a virtual channel that is not available for playback e.g. as "not yet available" or even to conceal such media content item within the virtual channel. This feature is useful for the case a virtual media channel comprises a media content item that originates from a linear media content source and that has not been broadcasted yet. Preferably, the electronic media server and/or electronic media client are configured to cancel said mark and/or reveal the respective media content item when it is available for playback. The same applies to media content items that originate from a non-linear media content source and are only available for a relatively short time period - compared to the time period the media content item is intended to be presented in the virtual media channel.

Alternatively, the electronic media server is configured for presenting a virtual media channel like a real media channel with a predetermined sequence or playlist and a predetermined or at least suggested playback time. Consequently, when a user selects such virtual media channel, the media content item does not necessarily start at the beginning but rather be already running. However, the user still has control to leave the suggested playback schedule of that virtual channel and move backward or forward within the virtual media channel. In general the system is configured that the user can set a bookmark at a certain playback position of a media content item for simplifying resuming playback from that particular position. Preferably, the electronic media client is configured for setting such bookmark upon user request or automatically when a user leaves a virtual media channel. In particular, the electronic media client can be configured to automatically store playback-time information that unambiguously defines a bookmarked playback position in virtual media channel. Preferably, the playback-time information comprises an identification of a particular media content item of the virtual media channel and a time stamp referring to the playback position within the particular media content item.

The media content items of a virtual media channel are composed editorially. In general, a virtual media channel comprises media content items that have at least one attribute or feature in common, such as e.g. the same genre, theme, artist, historical background, geographical position, producer, director, or the like. Therefore, virtual media channels can also be referred to as theme channels, due to the commonalities of media content items of such virtual media channel. A theme channel could be e.g. a sports channel and more particular a soccer channel or the like as well as a nature channel, history channel, news channel or the like. A theme channel could be directed to cooking, finances or movies, such as blockbuster movies, western movies or the like.

The electronic media server according to the invention comprises a receiving unit for receiving channel information data that includes metadata of media content items, wherein the metadata comprises at least information about the title and the source of the respective media content item. The receiving unit may comprise a receiving unit that is configured for receiving metadata via the internet, terrestrial, satellite and/or cable broadcasting. The metadata is provided e.g. by a media provider, like a broadcasting transmitter, or a metadata provider, like an EPG provider.

Channel information data comprises data that identify each individual content item and at least one source where a respective content item can be retrieved from. In addition, channel information data comprises information about the sequence of content items comprised in the virtual channel so that a terminal device at the user's site can access each content in the predetermined sequence so the content items can be reproduced in a manner very similar to the reproduction of a play-list and very similar to simple reception and display of a traditional linear broadcast channel in a TV.

The electronic media server further comprises a storage device, for instance a harddisk and/or a flashdrive, for storing media channel information data of real and virtual media channels. The storage device can also be configured for storing received and/or converted media content items. Moreover, the electronic media server comprises a metadata delivery server for providing the media channel information data of the real and the virtual media channels to a plurality of electronic media clients. Preferably, the metadata delivery server is configured for transmitting the data to the clients via the internet. However, alternatively or additionally, the server may be configured for transmitting the data to the clients via terrestrial, satellite and/or cable broadcasting. The media channel information data of a real media channel comprises a link to a linear media content source, like a live broadcasting or a live streaming channel. The media channel information data of a virtual media channel comprises for each media content item of that respective virtual media channel a link to a respective linear or non-linear media content source. A non-linear media content source is a media content source that provides stored media content items on demand. Hence, a virtual channel may comprise live and playback media content items. Moreover, a virtual channel may comprise media content live broadcasted media content items that have to be saved by the server and/or the client for time-shifted playback in the virtual media channel.

Preferably, the electronic media content item information data comprises information about the format of the respective media content item. This information is important for the media content server for determining if a particular media content client is able to playback a particular media content item.

It is preferred that the electronic media server further comprising a content management system for managing a plurality of real media channels and virtual media channels. The content management system is connected to the receiving unit, storage device and the metadata delivery server. For managing the media channels, such content management system is configured for being accessed by a system operator via an operator interface. In a preferred embodiment, the electronic media content server further comprises a file analyzer for analyzing the file parameters, e.g. file format, video codec, audio codec, streaming transfer protocol, image dimensions, resolution, duration, file size, audio sampling rate, image frame rate, bitrate, etc., of a media content item by analyzing the metadata of that respective media content item. For media content items that bear media content information data comprising media content item file parameter information, the file analyzer just needs to analyze this information.

Preferably, the electronic media server further comprises a file selector for selecting media content items that have first file parameter that are playbackable at a determined electronic media client.

Alternatively, or additionally, a file converter could be provided for converting media content items that have second file parameter that are not reproducible at a determined electronic media client into the first file parameter that is reproducible at the respective electronic media client.

It is preferred that the file converter is configured for reading media content item information from the storage device and for saving converted media content items onto the storage device.

Further preferred, the file converter is configured to convert the optical resolution and/or an acoustical resolution of an electronic media content item.

Preferably, the electronic media server further comprises a data interface for providing media content items to the plurality of electronic media clients It is further preferred that, only media content items that have been analyzed by the file analyzer and converted by the file converter are provided via the data interface. It is further preferred that only metadata of media content items that have been analyzed by the file analyzer and selected by the file selector are provided by the metadata delivery system.

In an advantageous embodiment of the invention, the electronic media server is configured for receiving client information about electronic media clients and for determining media content item information and/or media channel information that have to be individually provided for a specific electronic media client, based on the client information of that particular electronic media client. By these means, the electronic media server can distinguish between different electronic media clients and just provide media content item information and media channel information to a client that is determined for receiving that specific information. The determination of an electronic media client can be dependent on the provider of the electronic media client and on subscriptions the user of the electronic media client has taken out.

It is preferred that the receiving unit comprises an RSS feed interface for receiving RSS feeds about media content items. Thus, as soon as the content management system has information about a media content item that is suitable for identifying that particular media content item, the receiving unit can receive an RSS feed on that particular media content item for acquiring more information about that particular media content item.

Preferably, the electronic media server further comprises an operator interface for enabling an operator of the electronic media server to generate at least one virtual media channel, create, delete and modify single video or audio files and/or add references to an externally hosted media file as well as to assign metadata to it and to determine media channel information that has to be provided for the electronic media clients. Preferably, the operator interface is configured to allow a plurality of operators of a plurality of different entities to connect to the electronic media system for performing these actions.

It is further preferred that the electronic media server comprises a channel editor for creating, naming, graphically designing, modifying and/or deleting virtual channels. With the channel editor, the operator of the electronic media server is enabled to compose, design and name a virtual channel from a plurality of media content items. Moreover, the operator can edit existing virtual channels, e.g. by adding or deleting media content items of that virtual channel. Furthermore, the operator is enabled to delete a whole virtual channel.

Preferably, the channel editor is configured for managing real media channels. By these means, the operator of the electronic media server is enabled to add and delete real media channels to the plurality of media channels to be provided to the plurality of electronic media clients.

The invention will now be described, by way of example, based on embodiments with reference to the accompanying drawings, wherein:
Fig. 1 shows a schematic block diagram of a preferred embodiment of a system for providing media channel information data to electronic media clients according to the present invention;
Fig. 2 shows a schematic workflow diagram of the system of Fig. 1; and
Fig. 3 shows a schematic overview of the cooperation between the electronic media server, the electronic media client and external entities.

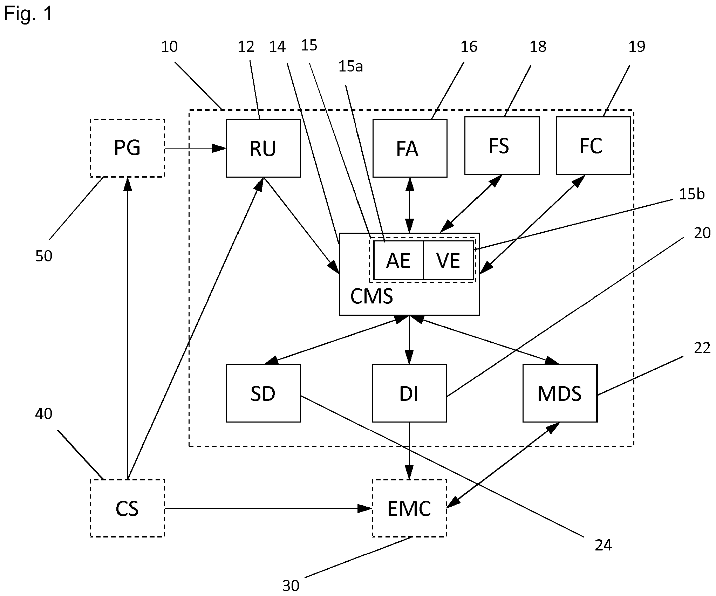

As can be inferred from Fig. 1, which shows a preferred embodiment of a system according to the invention, the system comprises an electronic media server 10 with a receiving unit 12 that is connected to a content management system 14. The electronic media server 10 is indicated with a dashed line.

The content management system 14 comprises a channel editor 15 for enabling an editor to create, graphically design, name, modify and/or delete virtual channels. Preferably, the channel editor 15 is configured for managing real media channels as well. Thus, real media channels can be added to and deleted from the content management system 14 by the channel editor 15. Within the channel editor 15, a media editor comprising a video editor 15a and an audio editor 15b is provided. The media editor enables the editor to create, delete and modify single media items, e.g. video or audio files, and/or add references to an externally hosted media file and assign metadata to it. Moreover, the operator can create a graphical design for a real media channel. By editing a real media channel with the channel editor 15 and thereby modify the name or the playlist of the real media channel, a virtual media channel is created.

The receiving unit 12 of the electronic media server 10 is configured for receiving metadata of media content items from a media content source 40 and/or a program guide 50, like an electronic program guide (EPG). The receiving unit 12 is further configured for providing the acquired metadata to the content management system 14. Beyond that and preferably, the receiving unit 12 is further configured for receiving media content items from the media content source 40 and to provide the received media content items to the content management system 14.

The electronic media server 10 comprises a file analyzer 16, which is connected to the content management system 14 for analyzing the file parameter, e.g. file format, video codec, audio codec, streaming transfer protocol, image dimensions, resolution, duration, file size, audio sampling rate, image frame rate, bitrate, etc., of media content items by reading the respective metadata. In this preferred embodiment, a file selector 18 is provided for selecting media content items having file parameters that a specific client is able to process. Preferably, the file selector 18 is in direct communication with the file analyzer 16. Alternatively or additionally to the file selector 18, a file converter 19could be provided for converting media content items that have second file parameter that are not reproducible at a determined electronic media client into the first file parameter that is reproducible at the respective electronic media client.

Furthermore, the electronic media server 10 comprises a storage device 24 for storing metadata of media content items. The storage device 24 may be further configured for storing media content items received from the receiving unit 12 and/or storing media content items that have been converted by the file converter 19. Therefore, the file converter 19 could be in direct communication with the storage device 24 as well for acquiring data, like a media content item, from the storage device 24 and writing data, such as a converted media content item, to the storage device 24.

The electronic media server 10 further comprises a metadata delivery system 22 for providing media channel information data to an electronic media client 30. The media channel information data comprises information data of at least one real media channel as well as information about media content items of at least one virtual media channel. The program (sequence of media content items) of a real media channel is usually generated by a content provider of the media content source 40 and provided by the media content source 40 or the program guide 50. Basically, the program of the virtual media channel is provided by an editor and/or editorial department that usually is economically conjoined or the same entity as the provider or the operator of the electronic media server 10 respectively. However, a virtual channel can be created and/or managed by any external entity and/or even the user of an electronic media client 30. The information about media content items comprises at least information about the media content item itself, like the name, title and/or denomination of the media content item, and about the media content source 40 the media content item originates from. Hence, the metadata delivery system 22 enables the electronic media client 30 acquiring a specific media content item from the respective linear media content source 40 or non-linear media content source 40 without the necessity of providing the media content item itself by the electronic media server 10.

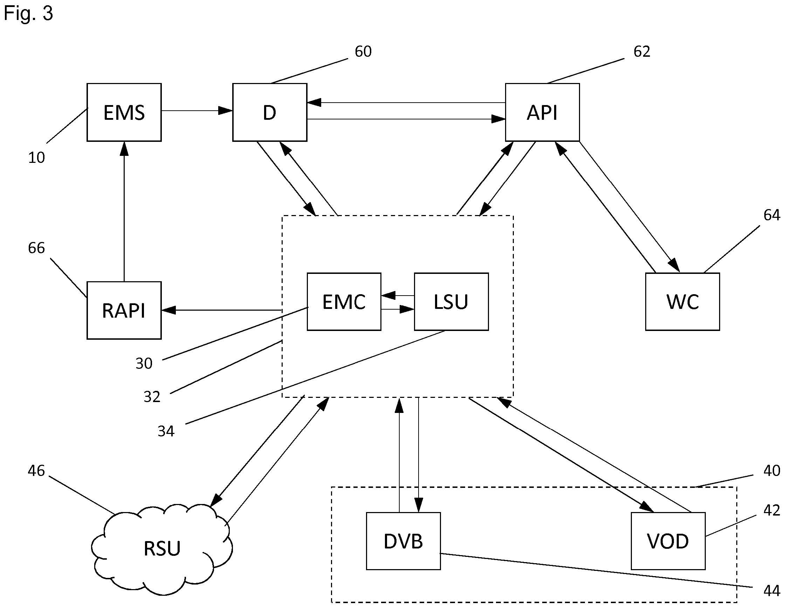

Thus, media content items of a linear media content source 40, namely broadcasted media content items, are automatically recordable by the electronic media client 30 for time-shifted playback, e.g. according to the playback schedule of a virtual media channel or the playback preferences of the user of the electronic media client 30. In particular, the electronic media client 30 is configured to process media channel information data of a virtual media channel and to thus determine linear media content items included in the virtual media channel. The electronic media client 30 is preferably further configured to trigger recording of linear media content items included in a virtual media channel and storing recorded linear media items on a local storage unit 34 or a remote storage unit 46. In addition to recording and storing linear media content items media content items of non-linear media content sources 40 can optionally be downloaded and stored. However, media content items of non-linear media content sources 40 usually do not have to be automatically downloaded by the electronic media client 30 because such media content items are usually permanently - or at least for at least the same time period as the media content items are offered in the virtual media channel - available from the media content source 40 for being accessed. In case a non-linear media content source 40 provides a media content item for a short period only - e.g. a shorter time period than the media content items are offered in the virtual media channel - the electronic media client 30 is configured for automatically downloading the respective media content item onto its local storage unit 34 (see Fig. 3) or a remote storage unit 46. In general, the storage unit can be local or remote. For storing media channel information data of real and virtual media channels the local storage unit 34 that is directly connected to or part of a settop box or a smart TV comprising the electronic media client 30 is preferred. Media content items may as well be stored in a remote storage unit 46 that can be accessed by the electronic media client 30 via e.g. the internet. Alternatively or additionally, the content management system 14 is configured for identifying such media content items and store them onto the storage device 24 if indicated. In general, it is preferred that the electronic media client 30 is configured for automatically recording or downloading media content items that will not be available at the media content source 40 within a predetermined time limit, e.g. the time period, the particular media content items are contained in a virtual channel offered by the electronic media server 10.

In addition, the electronic media server 10 comprises a data interface 20 that is configured for providing media content items to the electronic media client 30. The data interface 20 may be further configured for receiving data from the electronic media client 30, like information about the specific type of the electronic media client 30, subscriptions and/or file parameter the respective electronic media client 30 is able to reproduce and for providing the acquired information to the content management system 14. In an alternative embodiment, the data interface 20 and the metadata delivery system 22 may be the same or integrated in the same component.

The above described electronic media server 10 is just a preferred embodiment of the invention. A file converter 19 is preferred but rather an optional component and, therefore, it is not absolutely necessary for carrying out the present invention. In an alternative, not shown embodiment of the invention, the receiving unit 12, data interface 20 and metadata delivery system 22 could be integrated in the same component of the electronic media system 10.

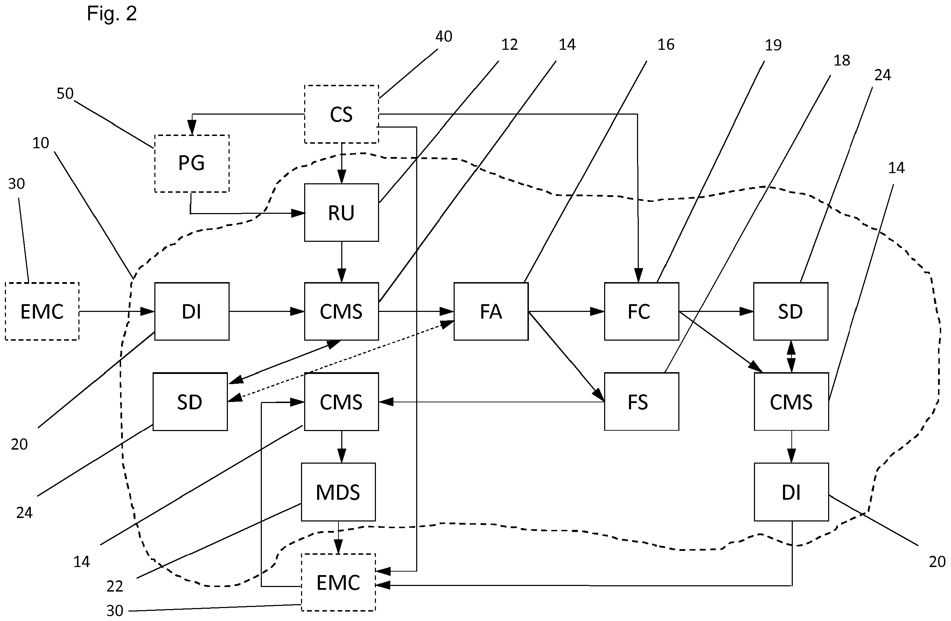

Fig. 2 shows a schematic workflow diagram of the above described system comprising an electronic media server 10 according to the invention. All processes that are performed within the electronic media server 10 are encompassed by a dashed line.

For clarity reasons, in the following description, the workflow is shown in a determined order starting from an initial step. However, according to the invention, some processes are running independently from each other and the sequence of these processes could be different than described. E.g., a process of acquiring information from the electronic media client 30 could be running before, during and/or after metadata is received by the receiving unit 12.

In a preferably initial step, metadata of media content items that is provided by the media content source 40 is received by the receiving unit 12 of the electronic media server 10. The metadata is acquired directly from the media content source 40 and/or from the program guide 50 and/or is entered manually into the media editor part, e.g. the video editor 15a or the audio editor 15b of the content management system 14.

In a subsequent step, the receiving unit 12 transmits the received metadata to the content management system 14. Preferably, the content management system 14 directly stores the received metadata to the storage device 24. Then, the content management system 14 provides selected or random metadata received from the receiving unit 12 to the file analyzer 16. The file analyzer 16 analyzes the file parameter of the media content item and forwards the result of the analysis to the file selector 18. The file selector 18 selects media content items that have file parameter that are reproducible at a specific electronic media client 30 for being presented to that specific electronic media client 30 within a virtual channel. Thus, each electronic media client 30 is provided with virtual channels comprising links to media sources of media content items that are reproducible on that respective electronic media client 30.

In a configuration, in which the metadata is stored in the storage device 24, the file analyzer 16 may receive the metadata directly from the storage device 24 without involving the content management system 14. After the file analyzer 16 has analyzed the metadata of a media content item, the result of the analysis is transmitted to the content management system 14 and/or forwarded to the file converter 19.

The content management system 14 forwards the metadata in the form of a real channel or a virtual channel via the metadata delivery system 22 to the electronic media client 30. Successively, the electronic media client 30 acquires a selected media content item from the media content source 40 for being instantly watched or buffered in the local storage unit 34 of the electronic media client 30 for being consumed, e.g. watched or listened to, at a later time. Moreover, by these means, a media content item does not have to be consumed in one piece. Playback can be interrupted, passages skipped, fast forwarded, rewinded and/or repeated.

In a further step, the electronic media client 30 is providing information about the kind or type of the electronic media client 30 via the data interface 20 to the content management system 14. Alternatively or additionally, the electronic media client 30 is configured for providing information about a media channel subscription of a user to the content management system 14. Preferably, the content management system 14 is configured for comparing this information with the media channels available for being presented to the electronic media clients 30 and to determine if a particular electronic media client 30 is authorized for receiving a specific media channel and/or able to process a specific media content item. In case the file format or codec of an analyzed media content item is not suitable for playback at a specific electronic media client 30, the respective media content item will be downloaded or streamed from the media content source 40 by the electronic media server 10, e.g. by the file converter 19 directly. During this process or successively, the file converter 19 converts the respective media content item into a format that is suitable for playback at the specific electronic media client 30. Preferably, in a successive step, the converted media content item is stored at the storage device 24 and/or provided to the content management system 14. For the case that the converted media content item is stored with the storage device 24, the content management system 14 is configured for receiving the media content item from the storage device 24 and providing it via the data interface 20 to the electronic media client 30. Alternatively, the content management system is configured for providing converted media content items to the electronic media client 30 directly via the data interface 20 without storing it within the electronic media server 10. In that case, it is preferred that the converted media content is stored in the local storage unit 34 of the electronic media client 30.

In the present embodiment, the electronic media client 30 is configured for sending specific information about the type or specific characteristics of the electronic media client 30 to the content management system 14. The content management system 14 evaluates this information and provides only metadata and/or media content items to the electronic media client 30 that are determined to be received by the respective electronic media client 30 e.g. due to playback capabilities of the electronic media client 30, subscriptions of the users of the electronic media client 30 and/or requirements concerning the provider of the electronic media client 30. Alternatively or additionally, the electronic media server 10 is configured for being provided with this information about the playback capabilities of specific electronic media clients 30 manually e.g. by the operator of the electronic media server 10.

Alternatively, the content management system 14 is configured for providing metadata of media content items to the electronic media clients 30 without considering subscriptions of particular media channels of the electronic media clients 30. In this alternative embodiment, the electronic media clients 30 distinguish between media channels that are subscribed to and that are not subscribed to and present to the user only subscribed media channels.

As the file analyzing process by the file analyzer 16 is not absolutely necessary for carrying out the invention, the identification of the electronic media client 30 is not absolutely necessary as well because, in an alternative to the illustrated embodiment, the electronic media server 10 could be configured for providing the same real and virtual channel information data to a plurality of electronic medial clients 30 without distinguishing between the different electronic media clients 30. Preferably, for the case that an electronic media client 30 is not able to playback a specific media content item, the electronic media client 30 is configured to send a request for converting that particular media content item to the electronic media server 10. Therefore, information about the type of electronic media client 30 would not be necessary for such embodiment.

Fig. 3 shows an example overview of the communication between the electronic media client 30, the electronic media server 10 and external entities. The electronic media client 30 comprises a set top box 32 e.g. for receiving electronic media content items and for forwarding the electronic media content items to a not shown display unit. The set top box has a not shown user interface for receiving user commands, such as media channel selections and explicit user ratings. The electronic media server 10 is configured for sending data 60 to the electronic media client 30. This data 60 comprises metadata of media content items as well as media channel information that is preferably sent to the electronic media client 30 by means of a push-service. In general, the electronic media server 10 is configured for sending data 60 by means of a pull-service as well. The latter is preferred for data 60 that comprises media content items, such as converted media content items that have been converted by the file converter 19 of the electronic media server, as can be seen best in Fig. 2. In this case, the electronic media client 30 is configured for sending a respective request to the electronic media server 10.

An important aspect of data 60 is media channel information data, such as media content item information data. The media content item information data comprises at least information that allows the electronic media client 30 to identify a particular media content item. Preferably, the electronic media client 30 is configured for automatically accessing additional information about that specific media content item from a web client 64 via an application programming interface (API) 62, based on the identification of a particular media content item. Preferably, this additional information comprises information about the content of the media content item - e.g. an abstract about the plot of a movie - about persons involved in creating the media content item - e.g. actors, directors or producer of the media content item - and/or supplemental information - e.g. genre, locations, ratings, rankings, etc.. In a preferred embodiment of the invention, alternatively or in addition, the electronic media server 10 is configured for providing this additional information to the electronic media client 30.

Preferably, the media content item information comprises information about the availability of a particular media content item, e.g. the media source 40 of a non-linear media content item. For linear media content items, besides the identification of the media source 40, the time of broadcast has to be provided to the electronic media client 30 in order to enable the electronic media client 30 to acquire a particular media content item. Preferably, this information is provided by the electronic media server 10. However, since the electronic media server 10 provides at least enough information to the electronic media client 30 to identify a particular media content item, the electronic media client 30 can acquire further information about the availability of the particular media content item from the web client 64 via the API 62.

Once the electronic media client 30 has acquired media content item information data, the electronic media client 30 can automatically receive the particular media content item from a media content source 40, like a video on demand source 42 or digital video broadcasting source 44. Preferably, the electronic media client 30 is configured that the process of receiving media content items is running in the background while the user is consuming another media content item or when the electronic media client 30 is in standby mode.

In general, media content items that are provided by a video on demand source 42 are available for download for a longer time period, namely as long as the media content item is offered at that particular source. The length of this time period can vary, depending on the provider of the respective non-linear media content source 40. During this period, at least the download process for a particular media content item has to be initiated and finished. Hence, a specific time for downloading such particular media content item does not have to be determined and just has to be within the above-described time period. However, a media content item that originates from a digital video broadcasting source 44 can only be received during the time period of broadcast. In other words, the beginning and end time of a recording session of broadcasted media content items is predetermined. Since the time of broadcast of a broadcasted media content item may differ from the time that particular media content item is consumed by the user, the electronic media client 30 is configured for saving broadcasted media content items to the local storage unit 34 for later playback availability. Preferably, the electronic media client 30 is configured for automatically starting and ending the download or saving process of a media content item.

In other words, the electronic media client 30 is configured for retrieving electronic media content items from the media content server 10 directly or from media content sources 40, like video on demand sources 42 and digital video broadcasting sources 44. In particular non-linear media content items can be acquired in the moment they are scheduled in a virtual media channel without the necessity of being saved to the local storage unit 34. The electronic media client 30 is configured for saving media content items onto the local storage unit 34 or a remote storage unit 46 for later playback, if necessary. On the other hand, media content items that originate from linear media content sources usually have to be saved to an local storage unit 34 or a remote storage unit 46 because the user of the electronic media client 30 may want to consume a particular media content item at a different time than the time it is broadcasted.

As an alternative or a supplementary to the local storage unit 34, a remote storage unit 46 - symbolized by a cloud - is provided. A remote storage unit 46 is e.g. a storage server that is configured for being remotely accessed by the media client 30. The remote storage unit 46 is configured for basically storing the same data as the local storage unit 34 is configured to store. The remote storage unit 46 is usually provided outside the set top box 32 and could be located at the electronic media server 10 site or at the site of a third party provider. The remote storage unit 46 is configured for storing media content items but could also be configured for converting media content items into a specific format, e.g. a format that is suitably for playback at a specific electronic media client 30. By these means, it is possible to use less storage space of the local storage unit 34. Optionally, the remote storage unit 46 can comprise a file converter for executing converting processes as described with respect to the electronic media server 10. Another advantage of the involvement of a remote storage unit 46 is the accessibility of the data stored on the remote storage unit 46. Basically, the remote storage unit 46 is configured for being accessed from an arbitrary location that has e.g. access to the internet. Thus, data saved by a first set top box 32 that is located at a first location could be accessed by a second set top box 32 that is located at a second location. Besides information about media channels and media content items as well as media content items themselves, user information such as a user profile or a configuration of the set top box 32 could be stored in the remote storage unit 46 as well. Consequently, a specific user can utilize a plurality of set top boxes 32 without the necessity of configuring each set top box 32 individually. Preferably, the usage of the remote storage unit 46 is password protected in order to avoid unauthorized access. Preferably, a user identification is implemented for providing individualized data for each user that is registered to the remote storage unit 46.

As an additional feature, a report application program interface (API) 66 is provided that is configured to enable the exchange of information from the set top box 32 to the electronic media server 10. Preferably, this information comprises user statistics, e.g. behavior, user ratings, preferred system configurations of the user, error reports, etc. Hence, the electronic media server 10 can be provided with information acquired by the media client 30. This information can be sent ad hoc - e.g. in case a respective event to be reported occurs - or at a scheduled time - e.g. once a day or a week. In this case, the information can be stored to the local storage unit 34 and/or the remote storage unit 46.

A specific feature of a preferred electronic media client is that the electronic media client is configured to display identifications (e.g. a respective title or name of a channel) of real media channels together with virtual media channels in a common representation. If the common representation corresponds to the table provided by traditional electronic program guides (EPG) such representation would for example comprise at least one row or column for each available channel including real and virtual media channels.

### References

- 10: Electronic Media Server
- 12: Receiving Unit
- 14: Content Management System
- 15: Channel Editor
- 15a: Video Editor
- 15b: Audio Editor
- 16: File Analyzer
- 18: File Selector
- 19: File Converter
- 20: Data Interface
- 22: Metadata Delivery System
- 24: Storage Device
- 30: Electronic Media Client
- 32: Set Top Box
- 34: Local Storage Unit
- 40: Media Content Source
- 42: Video On Demand Source
- 44: Digital Video Broadcasting Source
- 46: Remote Storage Unit
- 50: Program Guide
- 60: Data
- 62: Application Programming Interface (API)
- 64: Web Client
- 66: Report API

## Claims

1. An electronic media server (10) that is configured to provide media channel information data of a plurality of media channels to a plurality of electronic media clients (30), wherein the plurality of media channels comprises at least one real media channel and at least one virtual media channel, the system comprising:
a receiving unit (12) for receiving metadata of media content items, wherein the metadata comprises at least information about the title of the respective media content item and the media content source (40) the media content item originates from,
a storage device (24) for storing media channel information data of real media channels and virtual media channels,
a metadata delivery server (22) for providing the media channel information data of the real and the virtual media channels to a plurality of electronic media clients (30),
wherein the media channel information data of a real media channel comprises a link to a linear media content source (40) and the media channel information data of a virtual media channel comprises for each media content item of that respective virtual media channel a link to a respective linear media content source (40) or a non-linear media content source (40),
**characterized in that**
the electronic media server (10) is configured for being provided with client information about electronic media clients (30) and for determining media content item information data comprising information about the format of the respective media content item that has to be individually provided for a specific electronic media client (30), based on the client information of that particular electronic media client (30); and **in that**
the electronic media server (10) further comprises a file selector (18) for selecting media content items with first file parameters that are reproducible at a determined electronic media client (30) and a file converter (19) for converting media content items with second file parameters that are not reproducible at a determined media client (30) into media content items with first file parameters, wherein media content items with the first file parameters are reproducible at the specific electronic media client (30).

2. Electronic media server (10) of claim 1,
further comprising a content management system (14) for managing a plurality of real media channels and virtual media channels as well as metadata of media content items and media content items, wherein the content management system (14) is connected to the receiving unit (12), storage device (24) and the metadata delivery server (22).

3. Electronic media server (10) of claim 2,
further comprising a file analyzer (16) for analyzing the file format of a media content item by analyzing the metadata of that respective media content item.

4. Electronic media server (10) of claim 1,
wherein the file converter (19) is configured for reading media content item information of the storage device (24) and for saving converted media content items onto the storage device (24).

5. Electronic media server (10) of claim 1,
wherein the file converter (19) is configured to convert the optical resolution and/or an acoustical resolution of an electronic media content item.

6. Electronic media server (10) of any of the previous claims,
further comprising a data interface (20) for providing media content items to the plurality of electronic media clients (30).

7. Electronic media server (10) of any of the previous claims,
wherein the receiving unit (12) comprises an RSS feed interface for receiving RSS feeds about media content items.

8. Electronic media server (10) of any of the previous claims,
further comprising an operator interface for enabling an operator of the electronic media server (10) generating a virtual media channel, creating, deleting and modifying single video or audio files and/or adding references to an externally hosted media file as well as assigning metadata to it and determining media channel information to be provided for the electronic media clients (30).

9. Electronic media server (10) of any of the previous claims,
further comprising a channel editor (15) for creating, naming, graphically designing, modifying and deleting virtual channels.

10. Electronic media server (10) of claim 9,
wherein the channel editor (15) is configured for managing real media channels.

11. Electronic media system,
comprising an electronic media server (10) according to any of the previous claims and an electronic media client (30).

## Patentansprüche

1. Elektronischer Medien-Server (10), der ausgebildet ist, Medienkanal-Informationsdaten einer Vielzahl von Medienkanälen einer Vielzahl von elektronischen Medien-Clients (30) bereitzustellen, wobei die Vielzahl von Medienkanälen mindestens einen realen Medienkanal und mindestens einen virtuellen Medienkanal umfasst, das System aufweisend:
eine Empfangseinheit (12) zum Empfangen von Metadaten von Medieninhaltselementen, wobei die Metadaten mindestens Informationen über den Titel des jeweiligen Medieninhaltselementes und die Medieninhaltsquelle (40), aus der das Medieninhaltselement stammt, umfassen,
eine Speichervorrichtung (24) zum Speichern von Medienkanal-Informationsdaten von realen Medienkanälen und virtuellen Medienkanälen,
einen Metadaten-Bereitstellungsserver (22) zum Bereitstellen der Medienkanal-Informationsdaten der realen und der virtuellen Medienkanäle für eine Vielzahl von elektronischen Medien-Clients (30),
wobei die Medienkanal-Informationsdaten eines realen Medienkanals eine Verknüpfung zu einer linearen Medieninhaltsquelle (40) aufweisen und die Medienkanal-Informationsdaten eines virtuellen Medienkanals für jedes Medieninhaltselement dieses jeweiligen virtuellen Medienkanals eine Verknüpfung zu einer entsprechenden linearen Medieninhaltsquelle (40) oder einer nicht-linearen Medieninhaltsquelle (40) aufweisen,
**dadurch gekennzeichnet, dass**
der elektronische Medien-Server (10) ausgebildet ist, um mit Client-Informationen über elektronische Medien-Clients (30) versorgt zu werden und um Medieninhaltselement-Informationsdaten, die Informationen über das Format des jeweiligen Medieninhaltselements umfassen, das für einen bestimmten elektronischen Medien-Client (30) individuell bereitgestellt werden muss, basierend auf den Client-Informationen dieses bestimmten elektronischen Medien-Clients (30), zu ermitteln; und bei dem
der elektronische Medien-Server (10) weiterhin einen Datei-Selektor (18) zur Auswahl von Medieninhaltselementen mit ersten Dateiparametern, die an einem bestimmten elektronischen Medien-Client (30) wiedergebbar sind, und einen Dateikonverter (19) zum Konvertieren von Medieninhaltselementen mit zweiten Dateiparametern, die an einem bestimmten elektronischen Medien-Client (30) nicht wiedergebbar sind, in Medieninhaltselemente mit ersten Dateiparametern umfasst, wobei Medieninhaltselemente mit den ersten Dateiparametern an dem jeweiligen elektronischen Medien-Client (30) wiedergebbar sind.

2. Elektronischer Medien-Server (10) nach Anspruch 1, weiterhin umfassend ein Content-Management-System (14) zur Verwaltung einer Vielzahl von realen Medienkanälen und virtuellen Medienkanäle sowie Metadaten von Medieninhaltselementen und Medieninhaltselemente, wobei das Content-Management-System (14) mit der Empfangseinheit (12), der Speichervorrichtung (24) und dem Metadaten-Bereitstellungsserver (22) verbunden ist.

3. Elektronischer Medien-Server (10) nach Anspruch 2, weiterhin umfassend einen Datei-Analysator (16) zum Analysieren des Dateiformats eines Medieninhaltselementes durch Analyse der Metadaten dieses jeweiligen Medieninhaltselementes.

4. Elektronischer Medien-Server (10) nach Anspruch 1, wobei der Dateikonverter (19) zum Lesen von Medieninhaltselement-Informationen der Speichervorrichtung (24) und zum Speichern konvertierter Medieninhaltselemente auf der Speichervorrichtung (24) ausgebildet ist.

5. Elektronischer Medien-Server (10) nach Anspruch 1, wobei der Dateikonverter (19) ausgebildet ist, um die optische Auflösung und/oder eine akustische Auflösung eines elektronischen Medieninhaltselements zu konvertieren.

6. Elektronischer Medien-Server (10) nach einem der vorhergehenden Ansprüche, ferner umfassend eine Datenschnittstelle (20) zum Bereitstellen von Medieninhaltselementen an die Vielzahl von elektronischen Medien-Clients (30).

7. Elektronischer Medien-Server (10) nach einem der vorhergehenden Ansprüche, wobei die Empfangseinheit (12) eine RSS-Feed-Schnittstelle zum Empfang von RSS-Feeds über Medieninhaltselemente aufweist.

8. Elektronischer Medien-Server (10) nach einem der vorhergehenden Ansprüche, ferner umfassend eine Bedienerschnittstelle, die es einem Bediener des elektronischen Medien-Servers (10) ermöglicht, einen virtuellen Medienkanal zu erzeugen, einzelne Videooder Audiodateien zu erzeugen, zu löschen und zu modifizieren und/oder Verweise auf eine extern gehostete Mediendatei hinzuzufügen sowie ihm Metadaten zuzuweisen und Medienkanalinformationen zu bestimmen, die für die elektronischen Medien-Clients (30) bereitgestellt werden sollen.

9. Elektronischer Medien-Server (10) nach einem der vorhergehenden Ansprüche, ferner umfassend einen Kanal-Editor (15) zum Erstellen, Benennen, grafischen Gestalten, Modifizieren und Löschen von virtuellen Kanälen.

10. Elektronischer Medien-Server (10) nach Anspruch 9, wobei der Kanal-Editor (15) zur Verwaltung von realen Medienkanälen ausgebildet ist.

11. Elektronisches Medien-System, umfassend einen elektronischen Medien-Server (10) nach einem der vorhergehenden Ansprüche und einen elektronischen Medien-Client (30).

## Revendications

1. Serveur (10) multimédia électronique, qui est configuré pour fournir des données d'information de canaux multimédias d'une pluralité de canaux multimédia à une pluralité de clients (30) multimédias électroniques, la pluralité de canaux multimédias comprenant au moins un canal multimédia réel et au moins un canal multimédia virtuel, le système comprenant :
une unité (12) de réception pour recevoir une métadonnée d'éléments de contenu multimédia, la métadonnée comprenant au moins de l'information sur le titre de l'élément de contenu multimédia respectif et la source (40) de contenu multimédia, l'élément de contenu multimédia provenant de
un dispositif (24) de mémoire pour mettre en mémoire des données d'information de canal multimédia, de canaux multimédias réels et de canaux multimédias virtuels,
un serveur (22) d'envoi de métadonnée pour fournir la donnée d'information de canal multimédia des canaux multimédias réels et virtuels à une pluralité de clients (30) multimédias électroniques,
dans lequel la donnée d'information de canal multimédia d'un canal multimédia réel comprend un lien à une source (40) de contenu multimédia linéaire et la donnée d'information de canal multimédia du canal multimédia virtuel comprend, pour chaque élément de contenu multimédia de ce canal multimédia virtuel respectif, un lien à une source (40) de contenu multimédia linéaire ou à une source (40) de contenu multimédia non linéaire respective,
**caractérisé en ce que**
le serveur (10) multimédia électronique est configuré pour être pourvu d'une information client sur des clients (30) multimédias électroniques et pour déterminer une donnée d'information d'élément de contenu multimédia comprenant de l'information sur le format de l'élément de contenu multimédia respectif, qui a été fourni individuellement à un client multimédia électronique précis, sur la base de l'information de client de ce client (30) multimédia électronique particulier ; et **en ce que**
le serveur (10) multimédia électronique comprend en outre un sélecteur (18) de fichiers pour sélectionner des éléments de contenu multimédia ayant des premiers paramètres de fichier, qui sont reproductibles à un client (30) multimédia électronique déterminé, et un convertisseur (19) de fichier pour transformer des éléments de contenu multimédia ayant des deuxièmes paramètres de fichier, qui ne sont pas reproductibles à un client (30) multimédia déterminé, en des éléments de contenu multimédia ayant des premiers paramètres de fichier, des éléments de contenu multimédia ayant les premiers paramètres de fichier étant reproductibles au client (30) multimédia électronique précis.

2. Serveur (10) multimédia électronique suivant la revendication 1,
comprenant en outre un système (14) de gestion de contenu pour gérer une pluralité de canaux multimédias réels et de canaux multimédias virtuels, ainsi qu'une métadonnée d'éléments de contenu multimédia et des éléments de contenu multimédia, le système (14) de gestion de contenu étant relié à l'unité (12) de réception, au dispositif (14) de mise en mémoire et au serveur (22) d'envoi de la métadonnée.

3. Serveur (10) multimédia électronique suivant la revendication 2,
comprenant en outre un analyseur (16) de fichier pour analyser le format de fichier d'un élément de contenu multimédia, en analysant la métadonnée de cet élément de contenu multimédia respectif.

4. Serveur (10) multimédia électronique suivant la revendication 1,
dans lequel le convertisseur (19) de fichier est configuré pour lire de l'information d'éléments de contenu multimédia du dispositif (24) de mise en mémoire et pour sauvegarder sur le dispositif (24) de mise en mémoire des éléments de contenu multimédia transformés.

5. Serveur (10) multimédia électronique suivant la revendication 1,
dans lequel le convertisseur (19) de fichier est configuré pour transformer la résolution optique et/ou une résolution acoustique d'un élément de contenu multimédia électronique.

6. Serveur (10) multimédia électronique suivant l'une quelconque des revendications précédentes,
comprenant en outre une interface (20) de données pour fournir des éléments de contenu multimédia à la pluralité de clients (30) multimédia électronique.

7. Serveur (10) multimédia électronique suivant l'une quelconque des revendications précédentes,
dans lequel l'unité (12) de réception comprend une interface de signaux RSS pour recevoir des signaux RSS sur des éléments de contenu multimédia.

8. Serveur (10) multimédia électronique suivant l'une quelconque des revendications précédentes,
comprenant en outre une interface opérateur pour permettre à un opérateur du serveur (10) multimédia électronique de créer un canal multimédia virtuel, de créer, de supprimer et de modifier des fichiers vidéo ou audio uniques et/ou d'ajouter des références à un fichier multimédia logé à l'extérieur, ainsi que de lui affecter une métadonnée et de déterminer une information de canal multimédia à fournir aux clients (30) multimédia électroniques.

9. Serveur (10) multimédia électronique suivant l'une quelconque des revendications précédentes,
comprenant en outre un éditeur (15) de canal pour créer, dénommer, concevoir graphiquement, modifier et supprimer des canaux virtuels.

10. Serveur (10) multimédia électronique suivant la revendication 9,
dans lequel l'éditeur (15) de canal est configuré pour gérer des canaux multimédia réels.

11. Système multimédia électronique,
comprenant un serveur (10) multimédia électronique suivant l'une quelconque des revendications précédentes et un client (30) multimédia électronique.
